(19) Europäisches Patentamt
European Patent Office
Office européen des brevets

(11) Publication number: **0 177 283**
**A2**

# (12) EUROPEAN PATENT APPLICATION

(21) Application number: 85306869.0

(22) Date of filing: 27.09.85

(51) Int. Cl.⁴: **C 09 K 3/18**
C 09 D 5/00

(30) Priority: 29.09.84 JP 204628/84

(43) Date of publication of application: 09.04.86 Bulletin 86/15

(84) Designated Contracting States: DE FR GB IT

(71) Applicant: INUKAI SANGYO KABUSHIKI KAISHA
1,2-chome,Tomikawa-cho Nakagawa-ku
Nagoya-shi Aichi-ken(JP)

(72) Inventor: Wada, Kohachiro
JK6-306, 4-2 Miyaoki
Nagano-shi Nagano-ken(JP)

(74) Representative: Silverman, Warren et al,
HASELTINE LAKE & CO. Hazlitt House 28 Southampton Buildings Chancery Lane
London WC2A 1AT(GB)

## (54) Protective film-forming composition.

(57) A protective film-forming composition for use as such or in a paint composition comprises a finely powdered fluororesin dispersed in a dispersing medium and compatible therewith, and containing a silica adhesive mixed therein.

# PROTECTIVE FILM-FORMING COMPOSITION

This invention relates to a coating composition for providing a protective film on a substrate as a mildew proofing agent and to paint compositions comprising the same.

The most common mildew proofing compositions available on the market are those which contain naphthenate metal salts or trichlorophenol and pentachlorophenol. These compositions have largely replaced compositions containing mercury, e.g. mercurial, which used to be widely used and which were banned because of their toxicity. However, neither naphthenate metal salt compositions nor trichloro- and pentachlorophenol compositions possess satisfactory mildew proofing effect.

It is an object of the present invention to provide a protective film-forming composition which has a high mildew proofing effect.

According to the present invention, there is provided a protective film-forming composition which comprises a dispersion of a finely divided fluororesin in a dispersing medium compatible therewith, which composition additionally contains a silica adhesive.

This invention is based on the initial discovery that a mineral containing fluorine, such as fluorite has the particular property of preventing the breeding and growth of fungi even under conditions normally regarded as very favourable to fungal growth. This discovery has been taken further in that coating compositions have been devised containing various fluorides and synthetic fluorine-containing materials and studies and analyses of such compositions have been carried out. It is as a result of this work that a protective film-forming composition containing fluororesin has been developed.

By the term "fluororesin" is meant a halogenohydrocarbon polymer resin in which there is a high degree of substitution of chain carbon atoms by

fluorine atoms. Typically, a fluororesin has the following structure:

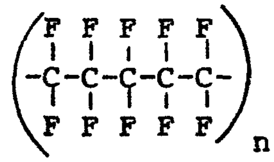

The basic skeleton thus has a carbon backbone with the small fluorine atoms densely surrounding the chain of carbon atoms. Therefore, relatively large molecules, such as molecules of water or other solvents cannot permeate a fluororesin coating. In addition, because fluorine-containing macromolecules have very high acid-resistance and very high base-resistance, there is no common solvent which can attack the fluororesin molecule and destroy the carbon chain thereof.

This particular property of a fluororesin can be advantageously and highly effectively utilised to prevent the growth of fungi and other microorganisms which prefer a "mesic" environment. Indeed, fungi which distribute several thousands or several ten thousands of cells through a variety of propagation methods generally require a mesic environment. However mesic environments are also required for propagation of other microorganisms including aerobic bacteria and anaerobic bacteria. The inventor has experimentally confirmed that black mould develops under conditions in which the temperature was approximately 18$^{\circ}$C, humidity was high, and there was only a slight throughput of air.

A coating comprising a fluororesin which has a high water repellency and accordingly does not allow even water molecules supplied in finely distributed form like a fine mist to permeate it, does not take up moisture which is one of essential requirements for breeding of fungi. The lack of water contributes to the prevention of the propagation of fungi.

The fluororesins used in the compositions of this invention are preferably:

a. polytetrafluoroethylene (PTFE)

b. tetrafluoroethylene-hexafluoropropylene copolymer (FEP)

c. tetrafluoroethylene-perfluoroalkylvinylether copolymer (PTA)

d. tetrafluoroethylene-ethylene copolymer (ETFE)

e. polytrifluorochloroethylene (CTFE)

f. polyvinylidene fluoride (PVDF)

although there may additionally be used:

g. polyvinyl fluoride (PVF) or

h. trifluoroethylene-ethylene copolymer (ECTEF).

In the practice of the present invention, the fluororesin is uniformly dispersed in finely powdered form in a dispersing medium. Then, a silica adhesive is mixed into the dispersing medium to produce a coating composition for forming a mildew proofing protective film. A fluororesin per se has poor adhesive character, and accordingly, it is very important to impart adhesive character to a coating composition comprising a fluororesin.

In order to ensure that the coating composition possesses good adhesive character:

1. the fluororesin used is finely powdered;

2. the fluororesin is uniformly dispersed in a dispersing medium which is compatible therewith, and

3. a silica adhesive which has a good adhesive character is mixed into the dispersing medium containing the fluororesin.

The fluororesin component is preferably provided by fluororesin which has been finely divided to a particle diameter below 0.3 μm. Finely powdered fluororesins consisting of particles having diameters of 0.2-0.3 μm are in fact commercially available.

The dispersing medium is used for the purpose of achieving uniform dispersion of the finely powdered resin in order to prevent the powder particles from locally agglomerating in the composition. The dispersing medium must be compatible with the fluororesin, and preferably

is based on a chlorofluorohydrocarbon. The following are typical examples of materials which may be used as the dispersing medium:

tetrachlorinated-difluorinated ethane

trichlorinated-trifluorinated ethane

azeotropic mixture of trichlorinated-trifluorinated ethane/acetone, and ethyl acetate azeotropic mixture of trichlorinated-trifluorinated ethane/ethanol

acetone

methyl ethyl ketone

liquid paraffin.

It should be noted that the dispersing medium having the fluororesin powder dispersed therein will have the appearance of a solution because of the fineness of the powder. However the powder is not actually dissolved in the dispersing medium.

As an alternative to making up a dispersion, it is possible to use a commercially available form of fluororesin in which 60% by weight of 0.2-0.3 μm fluororesin powder is dispersed in a petroleum hydrocarbon.

The silica adhesive used consists of silicon dioxide having a good adhesive character and compatible with the fluororesin in respect of chemical behaviour and physical properties. A typical example of such a silica adhesive is a silicon dioxide-alumina adhesive. An additive, such as pine resin or lanoline can be added to the silica adhesive to increase its adhesive character.

The following examples illustrate this invention. In the examples all percentages are expressed on a weight basis unless otherwise indicated:

## EXAMPLE 1

A coating composition was prepared from 750 g (29% by weight of total composition) of a commercially available low molecular weight tetrafluoroethylene (PTFE) crushed into particles of about 0.3 μm grain size, and then dispersed in 1000 cc of tetrachlorinated-difluorinated ethane (specific gravity: 1.634; weight, 64% of total composition). This dispersion had the appearance of a solution but was not in fact a solution. This apparent dissolution is because the fluororesin had good compatibility with the fluorine-containing solvent and almost no separation-sedimentation of fluororesin took place so long as it was not more than 0.3 μm grain size. 5 Parts of a silicon dioxide-alumina adhesive, the silicon dioxide-alumina adhesive commercially available under the name "KF-96" from Shin-etsu Kagaku Kogyo K.K., were then mixed into the dispersion medium and sufficiently stirred so as not to cause a separation out of the fluororesin.

The tetrachlorinated-difluorinated ethane dispersion medium had a high specific gravity, in fact the highest specific gravity and viscosity among commercially available fluorine-containing solvents, and accordingly it is one of the most chemically stable solvents. If a higher stability is required, in which no separation out of the fluororesin takes place for about one week, it is preferable to add a small amount (e.g. 0.5 parts) of a surface active agent, such as Nissan Nonion HS-206 which is commercially available from Nihon-yushi K.K. in order to increase the stability of the dispersion.

Since adhesive character is required of the composition of the present invention, if necessary an adhesion enhancing additive, such as a pine resin or refined lanoline (say 1.5 parts) can be added to the silica adhesive.

EXAMPLE 2

The procedure of Example 1 was repeated using 12 parts of 0.3 μm polytetrafluoroethylene powder having a low molecular weight, 78.8 parts of tetrachlorinated-difluorinated ethane as dispersing medium, 7.2 parts of silicon dioxide-alumina adhesive commercially available under the name "KF-96" from Shin-etsu Kagaku Kogyo K.K.,

1.2 parts of refined lanoline as auxiliary adhesive and 0.8 parts of the surface active agent Nissan Nonion HS-206, commercially available from Nihon-yushi K.K.

The coating composition thus produced was mainly intended to be used for the protection of electronic components or the like which are dipped in it. If the amount of fluororesin used in the composition of Example 1 is a maximum value, the amount of the amount of fluororesin in the composition of Example 2 can be considered a minimum value.

Preferably, the ratio by weight between the fluororesin, the dispersing medium, and the silica adhesive is such that when the weight percentage of the fluororesin is from 10 to 35%, those of the dispersing medium and the silica adhesive constitute from 60 to 80% and 5 to 10%, repectively of the composition.

EXAMPLE 3

A further coating composition was prepared by the procedure of Example 1 from 30.1 parts of 0.3 µm tetrafluoroethylene-hexafluoropropylene copolymer (FEP) powder, 62.9 parts of trichlorinated-trifluorinated ethane as dispersing medium, 5.2 parts of the silicon dioxide-alumina adhesive "KF-96" commercially available from Shin-etsu Kagaku Kogyo K.K., 0.4 parts of pine resin as auxiliary adhesive, 0.8 parts of refined lanoline as auxiliary adhesive and 0.6 parts of the surface active agent Nissan Nonion HS-206 commercially available from Nihon-yushi K.K.

EXAMPLE 4

A further coating composition was prepared by the procedure of Example 1 from 12.4 parts of 0.3 µm tetrafluoroethylene-hexafluoropropylene copolymer (FEP) powder, 77.5 parts of trichlorinated-trifluorinated ethane as dispersing medium, 6.4 parts of the silica dioxide-alumina adhesive "KF-96" commercially available from Shin-etsu Kagaku Kogyo K.K., 2.0 parts of pine resin as auxiliary adhesive, 1.0 part of refined lanoline as

auxiliary adhesive and 0.7 part of the surface active agent Nissan Nonion HS-206 commercially available from Nihon-yushi K.K.

EXAMPLE 5

A yet further coating composition was prepared by the procedure of Example 1 from 32.7 parts of 0.3 μm tetrafluoroethylene-perfluoroethylvinylether copolymer (PTA) powder, 60.7 parts of a mixed solvent of an azeotropic mixture of trichlorinated-trifluorinated ethane/acetone, and ethyl acetate (mixing ratio : 3:1 by volume) 5.7 parts of silicon dioxide-alumina adhesive "KF-96" commercially available from Shin-etsu Kagaku Kogyo K.K., 0.04 part of dry colloidal Ag powder and 0.86 part of the surface active agent Nissan Nonion HS-206 commercially available from Nihon-yushi K.K.

In this example, a small amount of an additive consisting of electrolytic silver (finely divided colloidal particles of metallic silver deposited on a cathode plate by electrolysis) was added to increase the mildew proofing effect. This is because the electrolytic silver (Ag colloid) firmly combines with sulphur of a sulphydril radical in the protoplasm of fungal cell material, resulting in the prevention of oxidation and reduction in growth of fungi.

EXAMPLE 6

A coating composition was prepared by the procedure of Example 1 from 13.96 parts of 0.3 μm tetrafluoroethylene-perfluoroethylvinylether copolymer (PTA) powder, 77.6 parts of a mixed solvent of trichlorinated-trifluorinated ethane/acetone azeotropic mixture and ethyl acetate (mixing ratio: 3:1 by volume) as dispersing medium, 7.26 parts of the silicon dioxide-alumina adhesive "KF-96" commercially available from Shin-etsu Kagaku Kogyo K.K., 0.06 part of dry colloidal Ag powder, and 1.12 part of the surface active agent Nissan Nonion HS-206 commercially available from Nihon-yushi K.K.

EXAMPLE 7

A coating composition was prepared by the procedure of Example 1 from 31.24 parts of 0.3 μm tetrafluoroethylene-ethylene copolymer (ETFE) powder, 65.53 parts of an azeotropic mixture of trichlorinated-trifluorinated ethane/ethanol as dispersing medium, 5.42 parts of silicon dioxide-alumina adhesive "KF-96" commercially available from Shin-etsu Kagaku Kogyo K.K., 0.02 part of dry colloidal Ag powder and 0.79 part of the surface active agent Nissan Nonion HS-206 commercially available from Nihon-yushi K.K.

EXAMPLE 8

A final composition prepared by the procedure of Example 1 consisted of 13.15 parts of 0.3 μm tetrafluoroethylene-ethylene copolymer (ETFE) powder, 79.98 parts of an azeotropic mixture of trichlorinated-trifluorinated ethane/ethanol as dispersing medium, 6.84 parts of the silicon dioxide-alumina adhesive "KF-96" commercially available from Shin-etsu Kagaku Kogyo K.K., 0.03 part of dry colloidal Ag powder, and 1.00 part of the surface active agent Nissan Nonion HS-206 commercially available from Nihon-yushi K.K.

The behaviour of the compositions of the preceding examples in their mildew proofing effect in comparison with that of commercially available products is compared in the following Examples.

Test Conditions

Test compositions of the preceding Examples and comparative compositions were each applied to a piece of wood used as a culture medium for fungal spores which bred on the wood piece. The wood pieces were then suspended in a desiccator which contained a saturated solution of potassium nitrate. The desiccator was then put in a chamber which was kept at a constant temperature of 30°C and a humidity of 80% for four months to observe the growth of fungi.

The following results were observed:

Experimental Results

| Test No. | Growth | Test Sample | Specification | Date of appearance of fungal growth |
| --- | --- | --- | --- | --- |
| 1 | - | PRESENT INVENTION(1) | White Inorganic Paint | none |
| 2 | - | PRESENT INVENTION(2) | do | none |
| 3 | - | PRESENT INVENTION(3) | do | none |
| 4 | - | PRESENT INVENTION(4) | do | none |
| 5 | +++ | Company A Mildew Proofing Paint | White Organic Compound Paint | 14th day |
| 6 | ++ | Company B Mildew Proofing Paint | do | 22nd day |
| 7 | +++ | Company C Mildew Proofing Paint | do | 15th day |
| 8 | ++ | Company D Mildew Proofing Paint | Transparent Organic Compound | 21st day |

| | | | | |
|---|---|---|---|---|
| 9 | ++++ | Company E Mildew Proofing Paint | Transparent Organic Compound | 7th day |

Remarks:

1. The test samples denoted present invention (1) and (2) in the table correspond to the composition of Example 1 and (3) and (4) to the composition of Example 3.

2. "-" in the "GROWTH" column of the table denotes no growth of fungus, while "+", "++', and "++++" denote the growth of fungus over areas of 2 cm, 4 cm, and 9 cm, respectively.

As can be seen from the aforementioned experimental results, mildew proofing compositions embodying the present invention almost completely prevent breeding and growth of fungi. Furthermore the paint composition contributes also to protection against rust and other forms of corrosion. In addition to the foregoing, a composition embodying the present invention has chemical resistance, high heat resistance, water resistance and oil resistance.

Although the composition of the present invention has been described mainly as a clear mildew preventing composition, it can be utilised as a constituent of anti-fungal paints and varnishes containing inorganic or organic pigments/colourants as appropriate. Otherwise, it may be applied as a first composition to which a paint or varnish is subsequently applied.

Claims:

1. A protective film-forming composition which comprises a dispersion of a finely divided fluororesin in a dispersing medium compatible therewith, which composition additionally contains a silica adhesive.

2. A composition according to claim 1, wherein the fluororesin is selected from polytetrafluoroethylene, tetrafluoroethylene-hexafluoropropylene copolymer, tetrafluoroethylene-perfluoroalkylvinylether copolymer, tetrafluoroethylene-ethylene copolymer, polytrifluorochloroethylene and polyvinylidene fluoride.

3. A composition according to claim 1 or 2, wherein the fluororesin powder has a particle size of not more than 0.3 μm.

4. A composition according to any preceding claim, wherein the dispersing medium is or comprises a chlorofluorohydrocarbon.

5. A composition according to claim 4, wherein said chlorofluorohydrocarbon is selected from tetrachlorinated-difluorinated ethane, trichlorinated-trifluorinated ethane, a mixed solvent of an azeotropic mixture of trichlorinated-trifluorinated ethane/acetone, and ethyl acetate, and an azeotropic mixture of trichlorinated-trifluorinated ethane/ethanol.

6. A composition according to any one of claims 1 to 3, wherein the dispersing medium is selected from methyl ethyl ketone, ethyl acetate and liquid paraffin.

7. A composition according to any preceding claim, wherein the silica adhesive is a silicon dioxide-alumina adhesive.

8. A composition according to any preceding claim, which contains from 10 to 35% by weight of the fluororesin, from 60 to 80% by weight of the dispersing medium and from 5 to 10% by weight of the adhesive.

9. A mildew proofing paint or varnish composition, which comprises a protective film-forming

composition as claimed in any preceding claim.